# EUROPEAN PATENT APPLICATION

(11) **EP 4 729 444 A1**
(43) Date of publication of application: **22.04.2026**
(21) Application number: 24207643.8
(22) Date of filing: 18.10.2024
(51) Int. Cl.: B65G 15/12, B65G 13/04, B65G 13/07

(54) **PALLET CONVEYOR COMPRISING A FIRST AND A SECOND CONVEYOR BELT AND A PLURALITY OF CONVEYOR ROLLERS**

(71) Applicant: Moovimenta AG, 4153 Reinach (CH)
(72) Inventor: Möllmann, Erik, 46414 Rhede (DE); Holthausen, Jan, 48734 Reken (DE); Dobrzynski, Michal Karol, 5600 Lenzburg (CH)
(74) Representative: Bohest AG

(57) **Abstract**

A pallet conveyor comprises a first conveyor belt (13) forming a first belt conveying surface (130) extending along a conveying direction (c), and a second conveyor belt (14) forming a second belt conveying surface (140) extending along the conveying direction (c). The first belt conveying surface (130) and the second belt conveying surface (140) are arranged parallel and side by side as well as spaced apart from each other with respect to a transverse direction (t) perpendicular to the conveying direction (c). The pallet conveyor further comprises a plurality of conveyor rollers (10, 10a) arranged along two rows (101, 102) extending along the conveying direction (c) and forming two roller conveying surfaces (105, 106) extending along the conveying direction (c). The two roller conveying surfaces (105, 106) are arranged between the first conveyor belt (13) and the second conveyor belt (14) parallel and side by side to the first belt conveying surface (130) and the second belt conveying surface (140). Each conveyor roller (10, 10a) of the plurality of conveyor rollers (10, 10a) is driven directly by at least one of the first conveyor belt (13) and the second conveyor belt (14).

## Description

The present patent application relates to a pallet conveyor comprising a first conveyor belt and a second conveyor belt.

Pallet conveyors are commonly used to convey loads placed on pallets. Suitable pallet conveyors typically comprise either a conveyor belt, for example a fabric or modular conveyor belt or a conveyor chain, or conveyor rollers. Such a pallet conveyor may be stationary, i.e. arranged at a fixed location. However, in large facilities, where dynamic pallet routing is required, such a pallet conveyor may also be displaceable by an autonomous mobile robot. It is preferred that the weight of such a pallet conveyor displaceable by an autonomous mobile robot is minimized to ensure a high operational time on a single battery charge and a high transfer speed, and to maximize the allowed payload for the pallet conveyor which may be limited by the autonomous mobile robot.

Pallets typically have a rectangular footprint with a long side and a short side. The pallet may be conveyed along a conveying direction with the short side leading or the long side leading. Commonly used types of pallets as specified by the European Pallet Association e.V. (EPAL), such as for instance the EPAL EURO pallet and the EPAL 3 pallet, have only two lower edge boards extending along the long side and no lower edge board arranged along the short side. Transporting such a pallet with the long side leading using conveyor rollers may lead to significant bouncing, unless the distance between adjacently arranged conveyor rollers is significantly smaller than the width of the lower edge board. However, a small distance between adjacently arranged conveyor rollers requires a large number of conveyor rollers which results in a comparably large weight of the pallet conveyor. A large weight of the pallet conveyor needs to be avoided, in particular when the pallet conveyor is moved by an autonomous mobile robot.

Thus, pallet conveyors comprising a pair of parallel conveying chains which are spaced apart to match the dimensions of the pallet may be used for transporting pallets with the long side leading. A pallet conveyor with a pair of parallel conveying chains is for instance disclosed in US 5 495 933 A. However, such a pallet conveyor is not suitable for conveying EPAL EURO or EPAL 3 pallets with the short side leading, if it is dimensioned for conveying such pallets with the long side leading, as the distance between the two parallel conveying chains is too big in order that the pallet is supported by both conveying chains at the same time. The typically small width of the conveying chains restricts the suitability of such a pallet conveyor to only one width and orientation of pallets on the pallet conveyor.

An object of the present invention is to avoid at least some of the drawbacks of the prior art, and in particular to provide a pallet conveyor that is suitable for conveying a pallet with a long side leading as well as with a short side leading and is at the same time lightweight.

This object is achieved by a pallet conveyor according to independent patent claim 1. Further advantageous embodiments are described in the dependent patent claims.

The essence of the invention lies in the following:
A pallet conveyor comprises
- a first conveyor belt forming a first belt conveying surface extending along a conveying direction, and
- a second conveyor belt forming a second belt conveying surface extending along the conveying direction.

The first belt conveying surface and the second belt conveying surface are arranged parallel and side by side as well as spaced apart from each other with respect to a transverse direction perpendicular to the conveying direction. The pallet conveyor further comprises a plurality of conveyor rollers arranged along at least one row extending along the conveying direction and forming at least one roller conveying surface extending along the conveying direction, wherein the at least one roller conveying surface is arranged between the first conveyor belt and the second conveyor belt parallel and side by side to the first belt conveying surface and the second belt conveying surface. Each conveyor roller of the plurality of conveyor rollers is driven directly by at least one of the first conveyor belt and the second conveyor belt.

The pallet conveyor according to the invention is advantageous in that it allows to convey a pallet either by the plurality of conveyor rollers, with the pallet resting on the at least one roller conveying surface, or by the first conveyor belt and the second conveyor belt, with the pallet resting on the first belt conveying surface and the second belt conveying surface, depending on the dimensions of the pallet and the orientation with which the pallet is arranged on the pallet conveyor. In case the extent of the pallet with respect to the transverse direction exceeds a distance between the first belt conveying surface (formed by the first conveyor belt) and the second belt conveying surface (formed by the second conveyor belt) with respect to the transverse direction, the pallet may be conveyed by the first conveyor belt and the second conveyor belt along the first belt conveying surface and the second belt conveying surface. In case the extent of the pallet with respect to the transverse direction is less than the distance between the first belt conveying surface and the second belt conveying surface, the pallet may be conveyed by the plurality of conveyor rollers.

In particular, a pallet having a rectangular footprint with a width that is less than the distance between the first belt conveying surface and the second belt conveying surface and a length that is larger than the distance between the first belt conveying surface and the second belt conveying surface can be conveyed with the long side leading by the first conveyor belt and the second conveyor belt and with the short side leading by the plurality of conveyor rollers.

This is in particular advantageous for pallets such as an EPAL EURO pallet and an EPAL 3 pallet which lack any lower edge board arranged along the short side of the pallet. Such a pallet may be transported with the long side leading by the first conveyor belt and the second conveyor belt and with the short side leading by the plurality of conveyor rollers. As such a pallet does, however, have a lower edge board arranged along the long side, it may be conveyed with the short side leading by the plurality of conveyor rollers which may be spaced apart from each other by a distance that is up to half the length of the pallet without significant bouncing. As the weight of each of the conveyor rollers is typically comparably large, a reduction of the number of conveyor rollers results in a significant weight reduction. A weight reduction is in particular advantageous for a pallet conveyor comprising an autonomous mobile robot unit. In this case, the weight reduction ensures a high operational time on a single battery charge, a high transfer speed, and a high allowed payload for the pallet conveyor displaceable by the autonomous mobile robot.

A conveyor belt as understood herein comprises any continuous carrying medium which can be driven along the conveying direction to convey a load, in particular a load arranged on a pallet. In particular, a conveyor belt as understood herein may be a conveyor chain, a modular conveyor belt, a monolithic conveyor belt or a fabric conveyor belt.

The first belt conveying surface, the second belt conveying surface and the at least one roller conveying surface may refer not only to a gapless physical conveying surface as such as for instance defined by a gapless continuous outer surface of a continuous conveyor belt, but also to the upper surface spanned by chain elements of a conveyor chain or to the upper surface spanned by the conveyor rollers. The first conveyor belt and the second conveyor belt may both circulate along a loop comprising an upper portion and a lower portion, wherein the current segment of the respective conveyor belt moved along the upper portion forms the respective belt conveying surface and the conveyor belt is returned along the lower portion of the loop. Each of the conveyor rollers may have a cylindrical outer roller surface. The roller conveying surface refers to the upper surface plane spanned by the plurality of conveyor rollers, in particular by the plurality of cylinder surface lines facing upwards.

Each of the conveyor rollers of the plurality of conveyor rollers may be rotatable around a rotation axis. The rotation axes of all conveyor rollers of the plurality of conveyor rollers may be oriented parallel to each other along the transverse direction, such that a pallet can be moved by the rotation of the conveyor rollers along the conveying direction.

The arrangement of the first belt conveying surface and second belt conveying surface parallel and side by side to each other comprises that the first belt conveying surface and the second belt conveying surface extend at least partially over the same range along the conveying direction.

Correspondingly, the arrangement of the at least one roller conveying surface parallel and side by side to the first belt conveying surface and the second belt conveying surface comprises that at least a portion of the at least one roller conveying surface extends at least partially over the same range along the conveying direction as the first belt conveying surface and the second belt conveying surface.

The conveyor rollers may be directly driven by engagement of at least one of the first conveyor belt and the second conveyor belt with a portion of the conveyor roller which comprises for instance a sprocket for embodiments where the first conveyor belt and the second conveyor belt are embodied for instance as conveyor chains or as toothed belts. Alternatively, each of the conveyor rollers may be driven frictionally by at least one of the first conveyor belt and the second conveyor belt.

The pallet conveyor may further comprise a position control system to control a position of the pallet conveyed by the pallet conveyor with respect to the conveying direction. For instance, the position control system may comprise an array of sensors arranged along the conveying direction to determine the current position of the pallet along the conveying direction. The position control system may be coupled to a drive unit of the pallet conveyor, such that the pallet can be positioned based on the current position determined by the array of sensors at a predetermined position with respect to the conveying direction on the pallet conveyor.

Preferably, the first belt conveying surface and the second belt conveying surface are arranged in a same plane and at a same vertical level, wherein the at least one roller conveying surface is arranged at a vertical level which is below the vertical level at which the first belt conveying surface and the second belt conveying surface are arranged.

The respective vertical level refers to a level along a vertical direction that is perpendicular to the conveying direction as well as to the transverse direction.

An arrangement of the first belt conveying surface and the second belt conveying surface in a same plane and at a same vertical level, and an arrangement of the at least one roller conveying surface at a vertical level below the one at which the first belt conveying surface and the second belt conveying surface are arranged, is advantageous in that pallets having a flat bottom surface with an extent with respect to the transverse direction exceeding a distance by which the first belt conveying surface is spaced apart from the second belt conveying surface can be conveyed horizontally along the conveying direction, and in that the pallet can be conveyed by the first conveyor belt and the second conveyor belt without any contact between the pallet and the conveyor rollers. By avoiding contact between the pallet and the conveyor rollers friction and wear are avoided in case of even small differences in the conveying speed provided by the conveyor rollers and the first conveyor belt and the second conveyor belt.

Preferably, the first conveyor belt, the second conveyor belt and the plurality of conveyor rollers are configured for providing a same conveying speed.

Said same conveying speed is advantageous in that for instance two subsequent pallets, one conveyed by the conveyor rollers, the other one conveyed by the first conveyor belt and the second conveyor belt, travel along the conveying direction with the same velocity, without any danger of collision of the two subsequent pallets. Moreover, friction and wear are avoided even in case any portions of the conveyed pallet contact the conveyor rollers as well as the first conveyor belt or the second conveyor belt.

Preferably, a distance by which the first belt conveying surface and the second belt conveying surface are spaced apart is in a range between 0.8 meters and 1.2 meters.

Said distance by which the first belt conveying surface and the second belt conveying surface are spaced apart is understood as an edge-to-edge distance.

Said distance being in said range is advantageous in that the pallet conveyor is suitable for conveying pallets of various standard types with the long side leading as well as with the short side leading and a subrange within said range may be chosen to adapt to the respective standard type of pallet. The subrange of said range may be chosen such that when a pallet of the respective standard type is conveyed with the long side leading, pallets of said type have a length which is enough to span the distance between the first belt conveying surface and the second belt conveying surface. When conveyed with the short side leading, the width of the pallets of the respective type is small enough to fit between the first belt conveying surface and the second belt conveying surface (and also between the first conveyor belt and the second conveyor belt), such that the pallet can be conveyed by the conveyor rollers.

Said distance being in said range is suitable for conveying pallets of the type EPAL EURO with the long side leading by the first conveyor belt and the second conveyor belt and with the short side leading by the conveyor rollers. Pallets of said type have a length of 1.2 meters and a width of 0.8 meters.

Said distance being in a subrange between 1.0 meters and 1.2 meters is suitable for conveying pallets of the type EPAL 2 and EPAL 3 with the long side leading by the first conveyor belt and the second conveyor belt and with the short side leading by the conveyor rollers. Pallets of said types have a length of 1.2 meters and a width of 1.0 meters.

Said distance being in a subrange between 0.9 meters and 1.1 meters is suitable for conveying pallets of the type US military pallets (as specified by the Department of Defense of the United States of America, see MIL-STD-1660, paragraph 4.8.3) with the long side leading by the first conveyor belt and the second conveyor belt and with the short side leading by the conveyor rollers. Pallets of said type have a length of 1.16 meters and a width of 0.89 meters.

Said distance being in a range between 1.05 meters and 1.2 meters is suitable for conveying pallets of the type GMA pallet (standardized by the Grocery Manufacturers Association (GMA)) with the long side leading by the first conveyor belt and the second conveyor belt and with the short side leading by the conveyor rollers. Pallets of said type have a length of 1.22 meters and a width of 1.02 meters.

Preferably, the plurality of conveyor rollers are arranged along
- a first row extending along the conveying direction and forming a first roller conveying surface extending along the conveying direction, and
- a second row extending along the conveying direction and forming a second roller conveying surface extending along the conveying direction.

The first roller conveying surface and the second roller conveying surface are arranged between the first conveyor belt and the second conveyor belt parallel and side by side to the first belt conveying surface and the second belt conveying surface and the conveyor rollers arranged along the first row are spaced apart from the conveyor rollers arranged along the second row with respect to the transverse direction.

An arrangement along a first row and a second row which are spaced apart from each other is advantageous in that the weight can be reduced compared to a plurality of conveyor rollers with each of the conveyor rollers extending along the transverse direction essentially along the whole distance between the first belt conveying surface and the second belt conveying surface.

In particular, pallets (such as the EPAL EURO pallet and the EPAL 3 pallet) typically comprise a lower edge board extending along each of the long sides and in addition a central lower board extending between the two lower edge boards. For conveying such a pallet with the short side leading in a stable manner, the pallet needs to be supported at the lower edge boards. The conveyor rollers arranged along the first row and the second row extending along the conveying direction may provide a suitable support for the pallet. Thus, such an arrangement of the plurality of conveyor rollers along the first row and the second row provides support for conveying such a pallet in a stable manner. At the same time, the space between the conveyor rollers arranged along the first and the second row results in a weight reduction compared to a plurality of conveyor rollers extending along the transverse direction over the entire space between the first belt conveying surface and the second belt conveying surface.

Preferably, a distance by which the conveyor rollers arranged along the first row forming the first roller conveying surface are spaced apart from the conveyor rollers arranged along the second row forming the second roller conveying surface with respect to the transverse direction is less than 0.8 meters.

Said distance being less than 0.8 meters ensures that an EPAL EURO pallet having a width of 0.8 meters as well as an EPAL 2 and an EPAL 3 pallet having a width of 1.0 meters can be conveyed by the conveyor rollers arranged along the first row and the second row with the short side leading. Moreover, it is ensured that GMA pallets having a width of 1.02 meters and US military pallets having a width of 0.89 meters can be conveyed by the conveyor rollers arranged along the first row and the second row with the short side leading.

Preferably, the first roller conveying surface and the second roller conveying surface are arranged in a same plane and at a same vertical level.

Such an arrangement of the roller conveying surfaces is advantageous in that pallets having a flat lower surface or lower edge boards with the respective bottom surfaces arranged at the same vertical level can be optimally supported by the pallet conveyor.

Preferably, each conveyor roller arranged along the first row is driven directly by the first conveyor belt and each conveyor roller arranged along the second row is driven directly by the second conveyor belt.

This is advantageous in that no further shaft or other mechanical elements are necessary for power transmission between the conveyor rollers arranged along the first row and the conveyor rollers arranged along the second row.

Preferably, the first conveyor belt is a first conveyor chain and the second conveyor belt is a second conveyor chain, wherein each conveyor roller comprises a roller sprocket engaging with one of the first conveyor chain and the second conveyor chain.

Conveyor chains are advantageous in that they are lightweight, durable and offer reliable transmission of torque from the conveyor chains to the conveyor rollers by engagement of each roller sprocket with the respective conveyor chain.

Preferably the pallet conveyor further comprises at least one tensioner for adjusting and retaining a position of an outermost roller along the conveying direction to adjust a pretension of one of the first conveyor belt and the second conveyor belt.

Such an at least one tensioner is advantageous in that the pretension of the first conveyor belt and the second conveyor belt can be adjusted for instance to adapt the pretension of the first conveyor belt and the second conveyor belt to the load to be conveyed or to compensate for wear. In case the first conveyor belt and the second conveyor belt are moved along closed loops around the conveyor rollers, the outermost roller of the at least one row may form a turning point of the respective closed loop.

Preferably, the pallet conveyor further comprises a plurality of support plates for supporting the first conveyor chain and the second conveyor chain, wherein each of the support plates is arranged between two conveyor rollers which are adjacently arranged with respect to the conveying direction.

The plurality of support plates ensure that the first conveyor belt and the second conveyor belt are sufficiently supported from below. In particular, the first conveyor belt and the second conveyor belt may need to be supported in sections along the conveying direction between each two conveyor rollers which are adjacently arranged with respect to the conveying direction in order to ensure a smooth conveying of pallets without bouncing.

Preferably, each conveyor roller comprises a rotational axis and the rotational axes of each two adjacently arranged conveyor rollers arranged along the at least one row are spaced apart by a distance with respect to the conveying direction which is in a range between 10 centimeters and 60 centimeters.

Said range of distances between the rotational axes between two adjacently arranged conveyor rollers ensures that a pallet for instance of the type EPAL EURO, EPAL 2 or EPAL 3 can be conveyed essentially without bouncing. At the same time, said range of distances allows for a reduced weight due to the distance between the rotational axes and between the conveyor rollers.

Preferably, the pallet conveyor further comprises a drive unit for driving the first conveyor belt and the second conveyor belt with a first sense of rotation and a second sense of rotation opposite to the first sense of rotation for conveying a pallet forth and back along the conveying direction.

The possibility to convey a pallet forth and back along the conveying direction as opposed to being limited to conveying a pallet only one way along the conveying direction increases the flexibility of the pallet conveyor. Said flexibility may be particularly advantageous in case the pallet conveyor is displaceable by an autonomous mobile robot unit.

For instance, the pallet to be conveyed can be loaded onto the pallet conveyor at a first end of the pallet conveyor, transported to a desired location by means of the autonomous mobile robot unit and then discharged from the pallet conveyor either at the first end or at a second end of the pallet conveyor opposite to the first end. Thereby, it can be avoided that the pallet conveyor with the autonomous mobile robot unit needs to be rotated in order that the end of the pallet conveyor from which the pallet conveyor can be discharged faces a discharge location.

Preferably, the pallet conveyor further comprises an autonomous mobile robot unit. The first conveyor belt, the second conveyor belt and the plurality of conveyor rollers are arranged on top of the autonomous mobile robot unit.

A pallet conveyor comprising an autonomous mobile robot unit is advantageous for large facilities where dynamic pallet routing is required. Such a pallet conveyor with an autonomous mobile robot unit offers flexibility in material handling and inventory management.

Further advantageous aspects of the invention will be apparent from the following detailed description of exemplary embodiments of a pallet conveyor according to the invention in conjunction with the associated drawings, in which:
- Fig. 1: - is a perspective view of the most essential parts of an embodiment of the pallet conveyor according to the invention;
- Fig. 2: - is a side view of the parts of the pallet conveyor shown in Fig. 1;
- Fig. 3: - is a top view of the parts of the pallet conveyor shown in Fig. 1;
- Fig. 4: - is an enlarged view of detail IV of Fig. 3 with a partial cross section;
- Fig. 5: - is a cross-sectional view along the line V-V shown in Fig. 3;
- Fig. 6: - is an enlarged view of the detail VI of Fig. 5;
- Fig. 7: - is a front view of the parts of the pallet conveyor shown in Fig. 1;
- Fig. 8: - is an enlarged view of the detail VIII of Fig. 7;
- Fig. 9: - is a top view of the parts of the pallet conveyor shown in Fig. 1 with a pallet conveyed with the short side leading;
- Fig. 10: - is a perspective view of the parts of the pallet conveyor with a pallet conveyed with the short side leading shown in Fig. 9;
- Fig. 11: - is a top view of the parts of the pallet conveyor shown in Fig. 1 with a pallet conveyed with the long side leading;
- Fig. 12: - is a perspective view of the parts of the pallet conveyor with a pallet conveyed with the long side leading shown in Fig. 11;
- Fig. 13: - is a perspective view of an embodiment of the pallet conveyor according to the invention comprising an autonomous mobile robot unit;
- Fig. 14: - is a top view of the embodiment of the pallet conveyor comprising an autonomous mobile robot unit shown in Fig. 13;
- Fig. 15: - is a side view of the embodiment of the pallet conveyor comprising an autonomous mobile robot unit shown in Fig. 13; and
- Fig. 16: - is a front view of the embodiment of the pallet conveyor comprising an autonomous mobile robot unit shown in Fig. 13.

The following observations apply in respect of the description which follows: where, for the purpose of clarity of the drawings, reference signs are included in a Figure but are not mentioned in the directly associated part of the description, reference should be made to the explanation of those reference signs in the preceding or subsequent parts of the description. Conversely, to avoid overcomplication of the drawings, reference signs that are less relevant for immediate understanding are not included in all Figures. In that case, reference should be made to the other Figures.

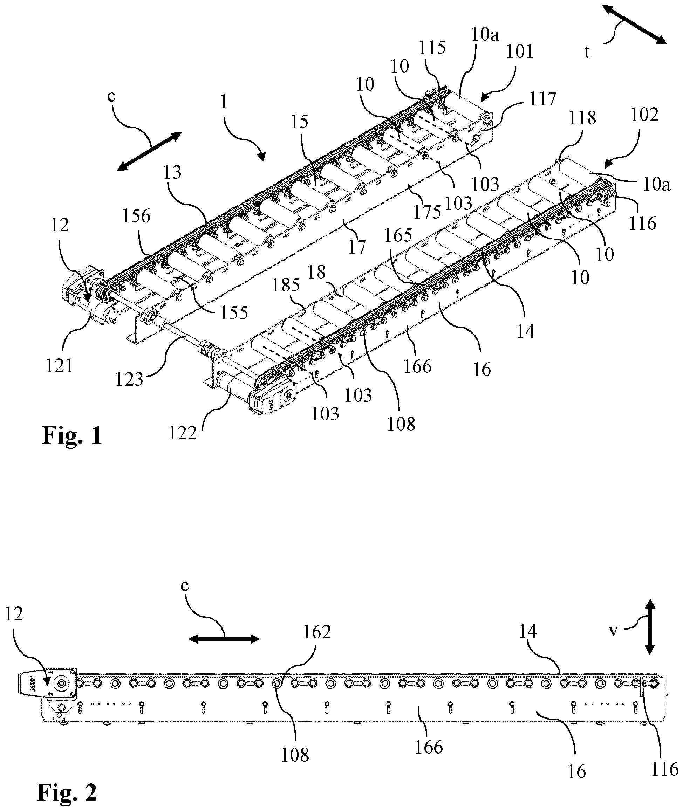

Fig. 1 shows a perspective view of the most essential parts of an embodiment of a pallet conveyor 1 according to the invention. The pallet conveyor 1 comprises a first conveyor belt 13 and a second conveyor belt 14 for conveying a pallet along a conveying direction c. The first conveyor belt 13 and the second conveyor belt 14 are arranged parallel and side by side to each other and spaced apart with respect to a transverse direction t perpendicular to the conveying direction c of the first conveyor belt 13 and the second conveyor belt 14. Each of the first conveyor belt 13 and the second conveyor belt 14 is a conveyor chain which is moved along a closed loop. In alternative embodiments, the first conveyor belt 13 and the second conveyor belt 14 may be embodied for example as modular conveyor belts, as monolithic conveyor belts or as fabric conveyor belts. The pallet conveyor 1 further comprises a plurality of conveyor rollers 10, 10a for conveying a pallet along the conveying direction c. The plurality of conveyor rollers 10, 10a are arranged between the first conveyor belt 13 and the second conveyor belt 14. The plurality of conveyor rollers 10, 10a are arranged along a first row 101 extending along the conveying direction c and a second row 102 extending along the conveying direction c. Each of the conveyor rollers 10 comprises a cylindrically shaped outer surface and is rotatable around a rotational axis 103, wherein the rotational axes 103 of all conveyor rollers 10, 10a of the plurality of the conveyor rollers 10, 10a are oriented along the transverse direction t perpendicular to the conveying direction c (i.e. parallel to each other). The conveyor rollers 10, 10a arranged along the first row 101 are rotatably mounted to a first outer support profile 15 and a first inner support profile 17. The conveyor rollers 10, 10a arranged along the second row 102 are rotatably mounted to a second outer support profile 16 and a second inner support profile 18.

The first conveyor belt 13 and the second conveyor belt 14 are both driven by a drive unit 12. The drive unit 12 comprises a first motor 121 mounted to the first outer support profile 15 and a second motor 122 mounted to the second outer support profile 16. The first motor 121 and the second motor 122 drive a drive shaft 123 which drives the first conveyor belt 13 and the second conveyor belt 14. The first conveyor belt 13 drives directly the conveyor rollers 10, 10a arranged along the first row 101 and the second conveyor belt 14 drives directly the conveyor rollers 10, 10a arranged along the second row 102. The drive unit 12, in particular the first motor 121 and the second motor 122, is configured for driving the drive shaft 123 (and thus the first conveyor belt 13 and the second conveyor belt 14) with a first sense of rotation and a second sense of rotation opposite to the first sense of rotation, such that a pallet can be conveyed by the conveyor rollers 10, 10a or the first conveyor belt 13 and the second conveyor belt 14 forth and back along the conveying direction c. In an alternative embodiment, the pallet conveyor may comprise just a single motor.

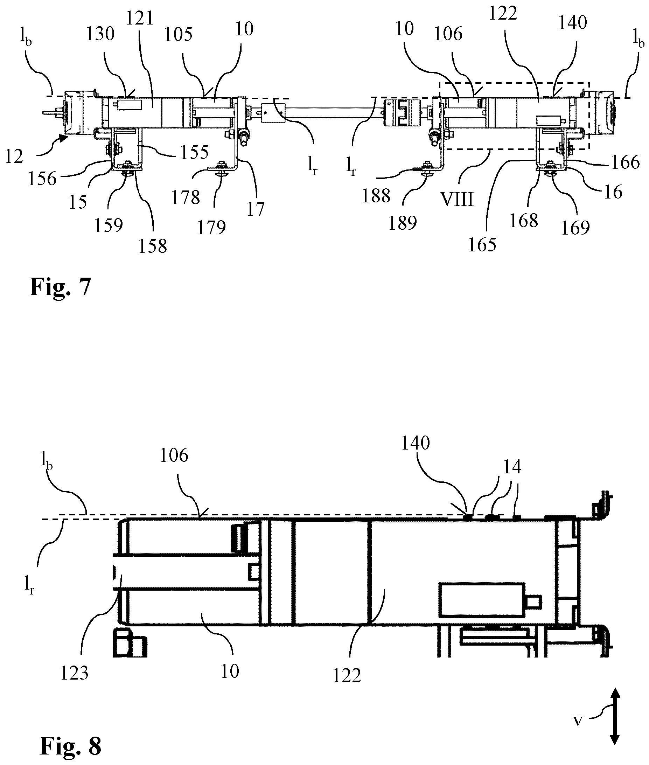

The first outer support profile 15 and the second outer support profile 16 are both hollow profiles which extend along the conveying direction c, as can be best seen in connection with Fig. 7. The first outer support profile 15 comprises an inner profile plate 155 and an outer profile plate 156 which extend vertically and parallel to each other along the conveying direction c. Accordingly, the second outer support profile 16 comprises an inner profile plate 165 and an outer profile plate 166 which extend vertically and parallel to each other along the conveying direction c.

The first inner support profile 17 and the second inner support profile 18 are both L-shaped profiles extending along the conveying direction c. The first inner support profile 17 comprises a profile plate 175 which extends vertically along the conveying direction c and the second inner support profile 18 comprises a profile plate 185 which extends vertically along the conveying direction c.

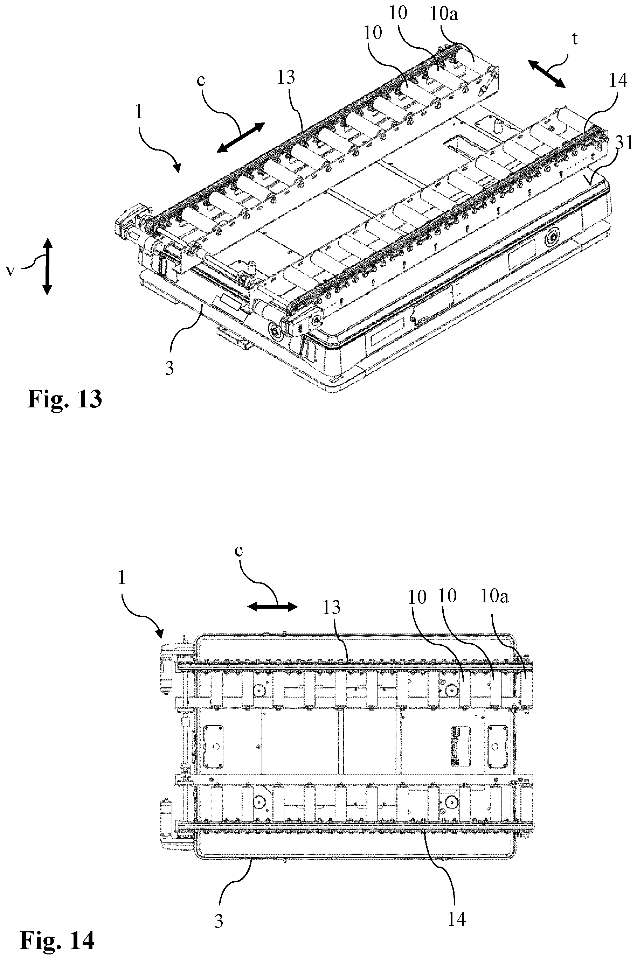

The first outer support profile 15, the second outer support profile 16, the first inner support profile 17 and the second inner support profile 18 may be fixedly mounted to a mounting surface, for instance of an autonomous mobile robot unit 3 as shown in Figs. 13-16.

As can be seen in Fig. 1, Fig. 2 and Fig. 4, each conveyor roller 10, 10a of the second row 102 is rotatably mounted to the outer profile plate 166 of the second outer support profile 16 by a respective mounting screw 108, wherein each of the mounting screws 108 for rotatably mounting the conveyor rollers 10, 10a arranged along the second row 102 is arranged in a mounting hole 162 of the outer profile plate 166 of the second outer support profile 16. Moreover, each conveyor roller 10, 10a of the second row 102 is rotatably mounted to the profile plate 185 of the second inner support profile 18 by a respective mounting screw 109, wherein each of the mounting screws 109 is arranged in a mounting hole (not visible in the drawings) of the profile plate 185 of the second inner support profile 18.

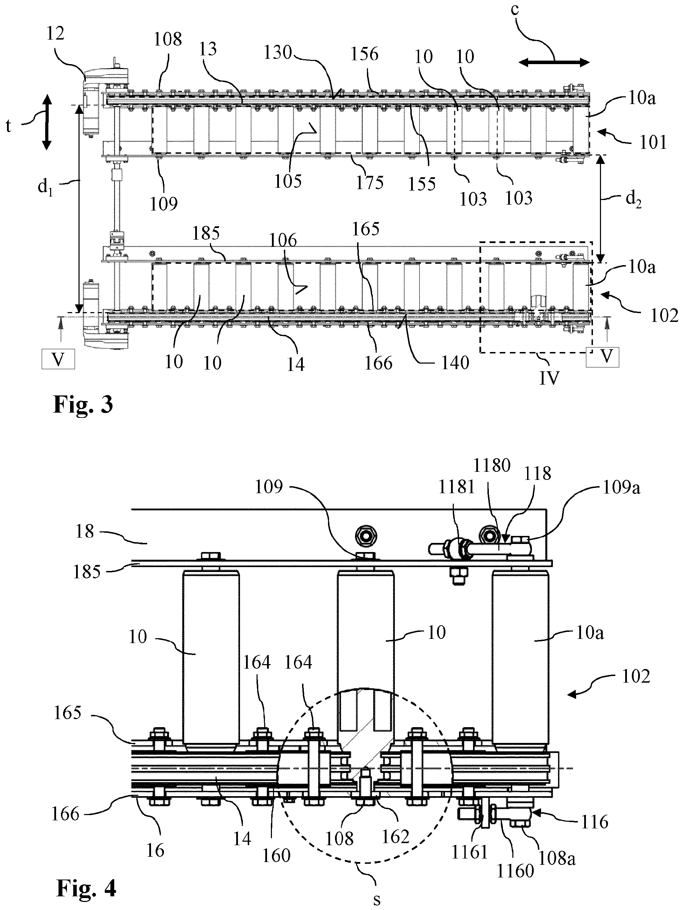

Accordingly, as can be seen in Fig. 3, each conveyor roller 10, 10a of the first row 101 is rotatably mounted to the outer profile plate 156 of the first outer support profile 15 by a respective mounting screw 108, wherein each of the mounting screws 108 for rotatably mounting the conveyor rollers 10, 10a arranged along the first row 101 to the first outer support profile 15 is arranged in mounting hole of the outer profile plate 156 of the first outer support profile 15 (not visible in Fig. 3). Moreover, each conveyor roller 10, 10a of the first row 101 is rotatably mounted to the profile plate 175 of the first inner support profile 17 by a respective mounting screw 109, wherein each of the mounting screws 109 is arranged in a mounting hole (not visible in the drawings) of the profile plate 175 of the first inner support profile 17.

The mounting holes 162 and the other mentioned not visible mounting holes are slotted mounting holes such that a position of each of the conveyor rollers 10, 10a along the conveying direction c is adjustable.

The respective outermost conveyor roller 10a of the first row 101 and the second row 102 forms a turning point of the respective loop along which the first conveyor belt 13 and the second conveyor belt 14 are moved.

As can be seen in Fig. 1, a tensioner 116 is mounted to the outer profile plate 166 of the second outer support profile 16 and a further tensioner 118 is mounted to the profile plate 185 of the second inner support profile 18 for adjusting and retaining a position of the outermost conveyor roller 10a of the second row 102 with respect the second outer support profile 16 and the second inner support profile 18 along the conveying direction c.

Accordingly, a tensioner 115 is mounted to the outer profile plate 156 of the first outer support profile 15 and a further tensioner 117 is mounted to the profile plate 175 of the first inner support profile 17 for adjusting and retaining a position of an outermost conveyor roller 10a of the first row 101 with respect to the first outer support profile 15 and the first inner support profile 17 along the conveying direction c.

Fig. 3 shows a top view of the pallet conveyor 1. The first conveyor belt 13 forms a first conveying surface 130 extending along the conveying direction c and the second conveyor belt 14 forms a second conveying surface 140 extending along the conveying direction c. The first conveying surface 130 and the second conveying surface 140 are arranged parallel and side by side to each other. In addition, the first conveying surface 130 and the second conveying surface 140 have the same extent along the conveying direction c. The first conveying surface 130 and the second conveying surface 140 are spaced apart by a distance d₁ with respect to the transverse direction t. The distance d₁ is preferably in a range between 0.8 meters and 1.2 meters.

The conveyor rollers 10, 10a which are arranged along the first row 101 form a first roller conveying surface 105 and the conveyor rollers 10, 10a arranged along the second row 102 form a second roller conveying surface 106. The first roller conveying surface 105 and the second roller conveying surface 106 are arranged between the first conveyor belt 13 and the second conveyor belt 14 as well as parallel and side by side to the first belt conveying surface 130 and the second belt conveying surface 140. The conveyor rollers 10, 10a arranged along the first row 101 are spaced apart from conveyor rollers 10, 10a arranged along the second row 102 with respect to the transverse direction t by a distance d₂. The distance d₂ is less than the distance d₁ and is preferably less than 0.8 meters.

Fig. 4 shows an enlarged view of the detail IV of Fig. 3. A domain s in Fig. 4 is shown as a partial cross section. As can be seen in the partial cross section s, the mounting hole 162 is slotted along the conveying direction c, such that a position of each of the conveyor rollers 10, 10a is adjustable along the conveying direction c. Accordingly, the conveyor rollers 10, 10a are mounted to the profile plate 185 of the second inner support profile 18 by the mounting screw 109 through a slotted mounting hole (not visible in the drawings).

The outermost conveyor roller 10a of the second row 102 is rotatably mounted to the outer profile plate 166 of the second outer support profile 16 by the mounting screw 108a and rotatably mounted to the profile plate 185 of the second inner support profile 18 by the mounting screw 109a through a respective slotted mounting hole.

The tensioner 118 comprises a threaded eyebolt 1180 which is connected to the conveyor roller 10a via the mounting screw 109a. The tensioner 118 further comprises a nut 1181 with an internal threading mounted to the profile plate 185 of the second inner support profile 18. The nut 1181 is mounted rotatably, but translationally fix to the profile plate 185 of the second inner support profile 18, such that the position of the threaded eyebolt 1180 and the mounting screw 109a along the conveying direction c can be adjusted and maintained.

The tensioner 116 comprises a threaded eyebolt 1160 which is connected to the conveyor roller 10a via the mounting screw 108a. The tensioner 116 further comprises a nut 1161 with an internal threading mounted to outer the profile plate 166 of the second outer support profile 16. The nut 1161 is mounted translationally fix to the outer profile plate 166 of the second outer support profile 16, such that the position of the threaded eyebolt 1160 and the mounting screw 108a along the conveying direction c can be adjusted and maintained.

By adjusting and maintaining the position of the mounting screw 108a and the mounting screw 109a along the conveying direction c, the position of the conveyor roller 10a along the conveying direction c can be adjusted and retained to adjust the pretension of the second conveyor belt 14.

The tensioner 115 and the tensioner 117 are connected in the same manner to the outermost conveyor roller 10a of the first row 101 and the first outer support profile 15 and the first inner support profile 17.

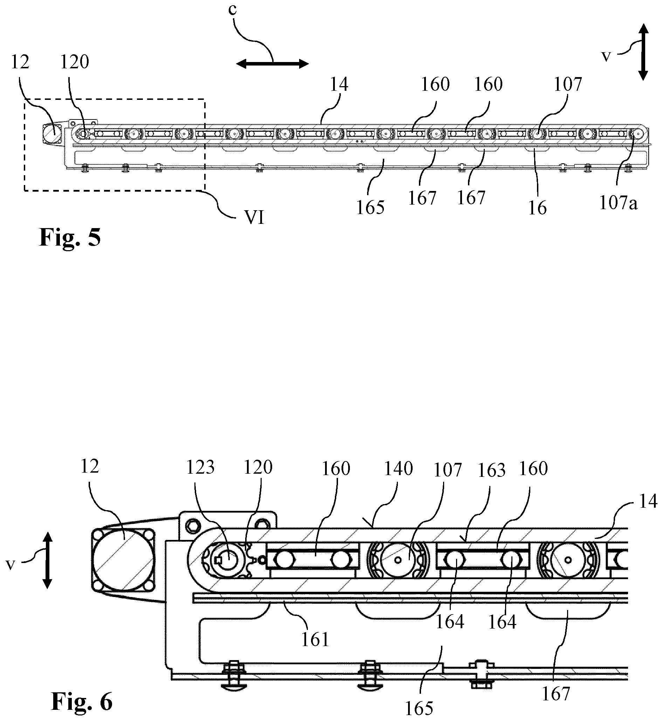

Fig. 5 shows a cross-sectional view of the pallet conveyor 1 along the line V-V shown in Fig. 3. Fig. 6 shows an enlarged view of detail VI of the cross-sectional view shown in Fig. 5. As can be seen, the drive unit 12 comprises a drive sprocket 120 attached to the drive shaft 123 to drive the second conveyor belt 14 (and another drive sprocket to drive the first conveyor belt 13, not shown in the drawings). The sprocket teeth of the drive sprocket 120 engage with second conveyor belt 14 to drive the second conveyor belt 14.

Each of the conveyor rollers 10, 10a comprises a roller sprocket 107, 107a. The sprocket teeth of each roller sprocket 107, 107a engage with the second conveyor belt 14, such that each roller sprocket 107, 107a of each conveyor roller 10, 10a arranged along the second row 102 (and thereby also each conveyor roller 10, 10a arranged along the second row 102) is driven by the second conveyor belt 14.

Similarly, but not shown in detail, each of the conveyor rollers 10, 10a arranged along the first row 101 comprises a roller sprocket 107, 107a. The sprocket teeth of each roller sprocket 107, 107a engage with the first conveyor belt 13, such that each roller sprocket 107, 107a of each conveyor roller 10, 10a arranged along the first row 101 (and thereby also each conveyor roller 10, 10a arranged along the first row 101) is driven by the first conveyor belt 13.

In the second outer support profile 16 a plurality of support plates 160 are mounted, each having an upper support surface 163 for supporting the second conveyor belt 14 from underneath, wherein each upper support surface 163 forms a sliding surface. Each of the support plates 160 is arranged between the roller sprockets 107, 107a of adjacently arranged conveyor rollers 10, 10a of the second row 102. A further support plate 160 is arranged between an outermost roller sprocket 107 and the driving sprocket 120 of the drive unit 12 driving the second conveyor belt 14. Each of the support plates 160 is mounted to the second outer support profile 16 between the inner profile plate 165 and the outer profile plate 166 by a pair of mounting bolts 164.

Similarly, also in the first outer support profile 15 a plurality of support plates 160 (not shown in the drawings) are mounted, each having an upper support surface 163 (not shown in the drawings) for supporting the first conveyor belt 13 from underneath, wherein each upper support surface 163 forms a sliding surface. Each of the support plates 160 supporting the first conveyor belt 13 is arranged between the roller sprockets 107, 107a of adj acently arranged conveyor rollers 10, 10a of the first row 101. A further support plate 160 is arranged between an outermost roller sprocket 107 and the driving sprocket 120 of the drive unit 12 driving the first conveyor belt 13. Each of the support plates 160 is mounted to the first outer support profile 15 between the inner profile plate 155 and the outer profile plate 156 by a pair of mounting bolts 164.

The inner profile plate 165 of the second outer support profile 16 comprises a plurality of recesses 167, each of the recesses 167 accommodating one of the conveyor rollers 10, 10a arranged along the second row 102. Similarly, the inner profile plate 155 of the first outer support profile 15 comprises a plurality of recesses (not shown in the drawings), each of the recesses of the inner profile plate 155 accommodating one of the conveyor rollers 10, 10a arranged along the first row 101.

Moreover, in the second outer support profile 16 a support plate 161 is mounted to support the second conveyor belt 14 moving along a return path underneath the plurality of the roller sprockets 107, 107a. A similar support plate is also mounted in the first outer support profile 15 to support the first conveyor belt 13 moving along a return path underneath the plurality of the roller sprockets 107, 107a.

Fig. 7 shows a front view of the pallet conveyor 1. Fig. 8 shows an enlarged view of detail VIII of Fig. 7. As can be seen best in Fig. 7, the first belt conveying surface 130 and the second belt conveying surface 140 are arranged at a same vertical level l_{b}. The respective vertical level refers to a vertical direction v which is perpendicular to the conveying direction c and the transverse direction t. In addition, the first belt conveying surface 130 and second belt conveying surface 140 are arranged in a same plane. The first roller conveying surface 105 and the second roller conveying surface 106 are arranged at a same vertical level lᵣ. Moreover, the first roller conveying surface 105 and the second roller conveying surface 106 are arranged in a same plane.

As can be seen best in Fig. 8, the vertical level lᵣ at which the second roller conveying surface 106 (and also the first roller conveying surface 105) is arranged is below the vertical level l_{b} at which the second belt conveying surface 140 (and also the first belt conveying surface 130) is arranged.

Moreover, the first outer support profile 15 further comprises a horizontal profile base plate 158 extending between the inner profile plate 155 and the outer profile plate 156 along the conveying direction c. The second outer support profile 16 comprises a horizontal profile base plate 168 extending between the inner profile plate 165 and the outer profile plate 166 along the conveying direction c. The first inner support profile 17 comprises a horizontal profile base plate 178 extending along the conveying direction c, and the second inner support profile 18 comprises a profile base plate 188 extending along the conveying direction c. The pallet conveyor 1 may be mounted to a mounting surface by a set of mounting screws 159 to fix the profile base plate 158 to said mounting surface, a set of mounting screws 169 to fix the profile base plate 168 to said mounting surface, a set of mounting screws 179 to fix the profile base plate 178 to said mounting surface and a set of mounting screws 189 to fix the profile base plate 188 to said mounting surface.

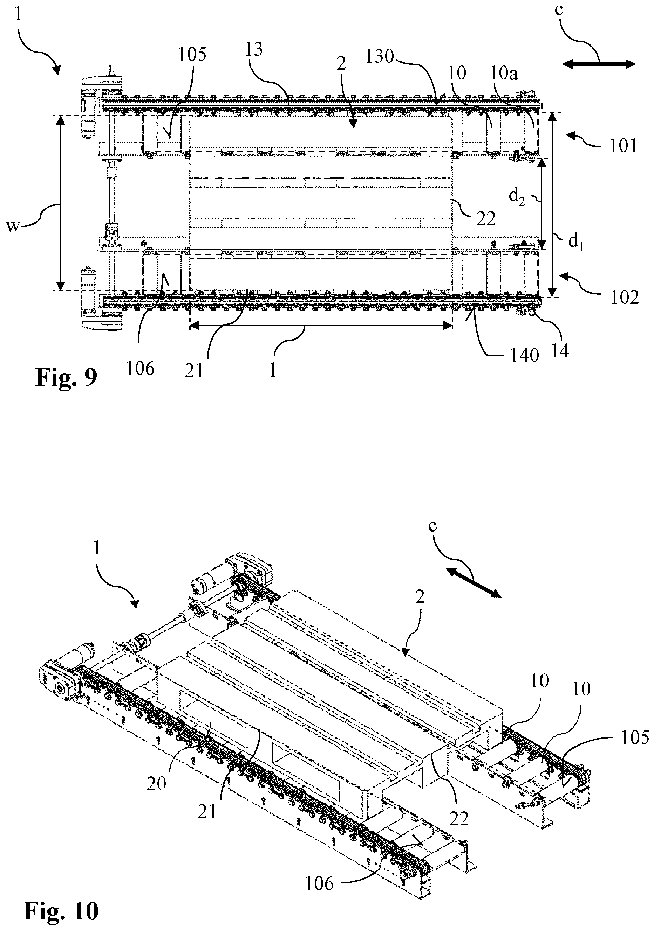

Fig. 9 and Fig. 10 both show the pallet conveyor 1 together with a pallet 2 conveyed by the pallet conveyor 1, Fig. 9 showing a top view and Fig. 10 showing a perspective view thereof. The pallet 2 has rectangular footprint having a width w (along the short side 22 of the rectangular footprint of the pallet 2) and a length l (along the long side 21 of the rectangular footprint of the pallet 2). As shown in Figs. 9 and 10, the pallet 2 is conveyed with the short side 22 leading.

The distance d₂ by which the conveyor rollers 10, 10a arranged along the first row 101 are spaced apart from the conveyor rollers 10, 10a arranged along the second row 102 is smaller than the width w of the pallet 2, which may be 1.0 meters or 0.8 meters. In contrast thereto, the distance d₁ by which the first belt conveying surface 130 and the second belt conveying surface 140 are spaced apart is larger than the width w of the pallet.

As can be seen best in Fig. 10, the bottom sides of the lower edge boards 20 of the pallet 2 contact the first roller conveying surface 105 and the second roller conveying surface 106 formed by the conveyor rollers 10, 10a. The pallet 2 is conveyed by the plurality of conveyor rollers 10, 10a along the conveying direction c.

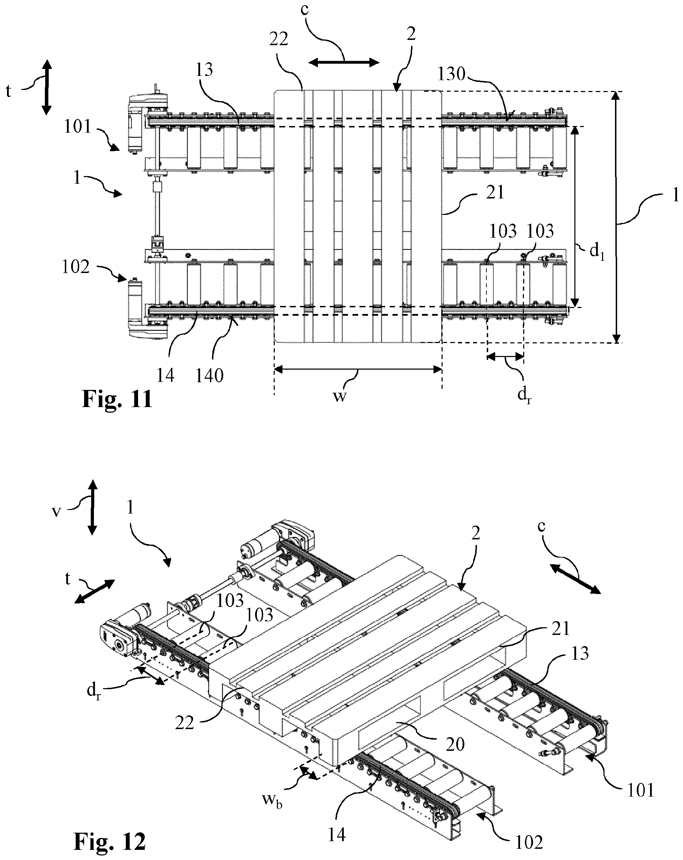

Fig. 11 and Fig. 12 both show the pallet conveyor 1 together with a pallet 2 conveyed by the pallet conveyor 1 with the long side 21 leading, Fig. 11 showing a top view and Fig. 12 showing a perspective view thereof.

The distance d₁ between the first conveying surface 130 and the second conveying surface 140 is less than the length l of the pallet 2, which may be 1.2 meters. The bottom sides of the lower edge boards 20 of the pallet 2 contact the first conveying surface 130 and the second conveying surface 140 formed by the first conveyor belt 13 and the second conveyor belt 14 of the pallet conveyor 1. The pallet 2 is conveyed by the first conveyor belt 13 and the second conveyor belt 14 along the conveying direction c.

A roller distance dᵣ between adjacently arranged conveyor rollers 10 arranged along the first row 101 and the second row 102 is larger than the board width w_{b} of the lower edge board 20 of the pallet 2 (see Fig. 12).

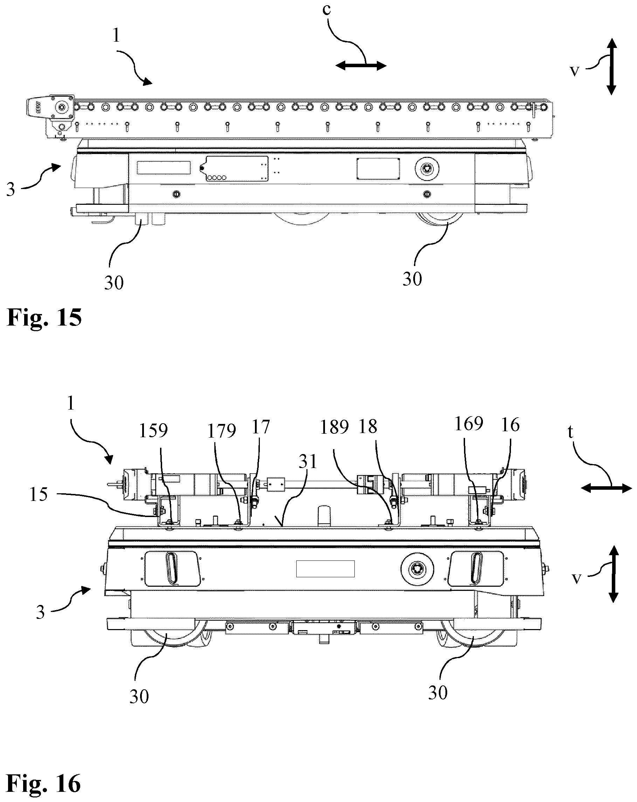

Figs. 13 to 16 show different views of the pallet conveyor 1 further comprising an autonomous mobile robot unit 3. Fig. 13 shows a perspective view, Fig. 14 shows a top view, Fig. 15 shows a side view and Fig. 16 shows a front view thereof.

The first conveyor belt 13, the second conveyor belt 14 and the plurality of conveyor rollers 10, 10a are fixedly arranged on an upper mounting surface 31 of the autonomous mobile robot unit 3.

As can be seen best in Figs. 15 and 16, the autonomous mobile robot unit 3 comprises a plurality of wheels 30 to move and steer the autonomous mobile robot unit 3. The autonomous mobile robot unit 3 further comprises a control unit (not shown in the drawings) controlling the wheels 30. The control unit of the autonomous mobile robot unit 3 may be connected to a receiver and transmitter to interact with a wireless device, such as a tablet with a suitable app installed thereon.

A pallet can be transferred for instance from a loading station, such as a stationary conveyor, onto the pallet conveyor 1 and then transported by the autonomous mobile robot unit 3 to a discharge station, which may comprise for instance a further stationary conveyor.

As can be seen best in Fig. 16, the first outer support profile 15, the second outer support profile 16, the first inner support profile 17 and the second inner support profile 18 are fixedly mounted to the mounting surface 32 of the autonomous mobile robot unit 3 by the plurality of mounting screws 159, 169, 179 and 189.

The autonomous mobile robot unit 3 may be a commercially available autonomous mobile robot, for instance the autonomous mobile robot OTTO 1200 by Rockwell automation, Milwaukee, WI, USA.

## Claims

1. Pallet conveyor (1), comprising:
- a first conveyor belt (13) forming a first belt conveying surface (130) extending along a conveying direction (c), and
- a second conveyor belt (14) forming a second belt conveying surface (140) extending along the conveying direction (c),
wherein the first belt conveying surface (130) and the second belt conveying surface (140) are arranged parallel and side by side as well as spaced apart from each other with respect to a transverse direction (t) perpendicular to the conveying direction (c), **characterized in that** the pallet conveyor (1) further comprises a plurality of conveyor rollers (10, 10a) arranged along at least one row (101, 102) extending along the conveying direction (c) and forming at least one roller conveying surface (105, 106) extending along the conveying direction (c), wherein the at least one roller conveying surface (105, 106) is arranged between the first conveyor belt (13) and the second conveyor belt (14) parallel and side by side to the first belt conveying surface (130) and the second belt conveying surface (140), and wherein each conveyor roller (10, 10a) of the plurality of conveyor rollers (10, 10a) is driven directly by at least one of the first conveyor belt (13) and the second conveyor belt (14).

2. Pallet conveyor (1) according to claim 1, **characterized in that** the first belt conveying surface (130) and the second belt conveying surface (140) are arranged in a same plane and at a same vertical level (l_{b}), and wherein the at least one roller conveying surface (105, 106) is arranged at a vertical level (lᵣ) which is below the vertical level (l_{b}) at which the first belt conveying surface (130) and the second belt conveying surface (140) are arranged.

3. Pallet conveyor (1) according to claim 1 or 2, **characterized in that** the first conveyor belt (13), the second conveyor belt (14) and the plurality of conveyor rollers (10, 10a) are configured for providing a same conveying speed.

4. Pallet conveyor (1) according to any one of the preceding claims, **characterized in that** a distance (d₁) by which the first belt conveying surface (130) and the second belt conveying surface (140) are spaced apart is in a range between 0.8 meters and 1.2 meters.

5. Pallet conveyor (1) according to any one of the preceding claims, **characterized in that** the plurality of conveyor rollers (10, 10a) are arranged along
- a first row (101) extending along the conveying direction (c) and forming a first roller conveying surface (105) extending along the conveying direction (c), and
- a second row (102) extending along the conveying direction (c) and forming a second roller conveying surface (106) extending along the conveying direction (c),
wherein the first roller conveying surface (105) and the second roller conveying surface (106) are arranged between the first conveyor belt (13) and the second conveyor belt (14) parallel and side by side to the first belt conveying surface (130) and the second belt conveying surface (140) and wherein the conveyor rollers (10, 10a) arranged along the first row (101) are spaced apart from the conveyor rollers (10, 10a) arranged along the second row (102) with respect to the transverse direction (t).

6. Pallet conveyor (1) according to claim 5, **characterized in that** a distance (d₂) by which the conveyor rollers (10, 10a) arranged along the first row (101) forming the first roller conveying surface (105) are spaced apart from the conveyor rollers (10, 10a) arranged along the second row (102) forming the second roller conveying surface with respect to the transverse direction (t) is less than 0.8 meters.

7. Pallet conveyor according to claim 5 or claim 6, **characterized in that** the first roller conveying surface (105) and the second roller conveying surface (106) are arranged in a same plane and at a same vertical level (lᵣ).

8. Pallet conveyor according to any one of claims 5 to 7, wherein each conveyor roller (10, 10a) arranged along the first row (101) is driven directly by the first conveyor belt (13) and each conveyor roller (10, 10a) arranged along the second row (102) is driven directly by the second conveyor belt (14).

9. Pallet conveyor (1) according to any one of the preceding claims, **characterized in that** the first conveyor belt (13) is a first conveyor chain (13) and the second conveyor belt (14) is a second conveyor chain (14), and wherein each conveyor roller (10, 10a) comprises a roller sprocket (107, 107a) engaging with one of the first conveyor chain (13) and the second conveyor chain (14).

10. Pallet conveyor (1) according to any of the preceding claims, further comprising at least one tensioner (115, 116, 117, 118) for adjusting and retaining a position of an outermost roller (10a) along the conveying direction (c) to adjust a pretension of one of the first conveyor belt (13) and the second conveyor belt (14).

11. Pallet conveyor (1) according to any one of the preceding claims, further comprising a plurality of support plates (160) for supporting the first conveyor chain (13) and the second conveyor chain (14), wherein each of the support plates (160) is arranged between two conveyor rollers (10, 10a) which are adjacently arranged with respect to the conveying direction (c).

12. Pallet conveyor (1) according to any one of the preceding claims, **characterized in that** each conveyor roller (10, 10a) comprises a rotational axis (103) and **in that** the rotational axes (103) of each two adjacently arranged conveyor rollers (10, 10a) arranged along the at least one row (101, 102) are spaced apart by a distance (dᵣ) with respect to the conveying direction (c) which is in a range between 10 centimeters and 60 centimeters.

13. Pallet conveyor (1) according to any one of the preceding claims, further comprising a drive unit (12) for driving the first conveyor belt (13) and the second conveyor belt (14) with a first sense of rotation and a second sense of rotation opposite to the first sense of rotation for conveying a pallet (2) forth and back along the conveying direction (c).

14. Pallet conveyor (1) according to any one of the preceding claims, further comprising an autonomous mobile robot unit (3), wherein the first conveyor belt (13), the second conveyor belt (14) and the plurality of conveyor rollers (10) are arranged on top of the autonomous mobile robot unit (3).
